# FASCICULE DE BREVET EUROPEEN

(11) **EP 4 073 751 B1**
(45) Date de publication et mention de la délivrance du brevet: **22.11.2023**
(21) Numéro de dépôt: 20842019.0
(22) Date de dépôt: 09.12.2020
(51) Int. Cl.: G06T 7/11, G06T 7/66, G06T 7/174, G06T 7/12, G01N 21/84, G01N 21/88

(54) **PROCÉDÉ DE RECONSTITUTION AUTOMATIQUE DE L'ARCHITECTURE DU RENFORT D'UN MATÉRIAU COMPOSITE**
VERFAHREN ZUM AUTOMATISCHEN WIEDERAUFBAU DER VERSTÄRKUNGSARCHITEKTUR EINES VERBUNDMATERIALS
METHOD FOR AUTOMATICALLY RECONSTITUTING THE REINFORCING ARCHITECTURE OF A COMPOSITE MATERIAL

(30) Priorité: 10.12.2019 FR 1914066
(43) Date de publication de la demande: 19.10.2022
(73) Titulaire: SAFRAN AIRCRAFT ENGINES, 75015 Paris (FR)
(72) Inventeur: WIELHORSKI, Yanneck, 77550 Moissy-cramayel (FR); BLUSSEAU, Samy, 75016 Paris (FR); VELASCO-FORERO, Santiago, 91190 Gif-sur-yvette (FR)
(74) Mandataire: Cabinet Camus Lebkiri
(86) Numéro de dépôt international: PCT/FR2020/052350
(87) Numéro de publication internationale: WO 2021/116602

(56) Documents cités:
- EP-A1- 3 054 286
- WO-A1-2015/024580
- WO-A1-2015/033044
- STIG FREDRIK ET AL: "Spatial modelling of 3D-woven textiles", COMPOSITE STRUCTURES, vol. 94, no. 5, 2012, pages 1495-1502, XP028909035, ISSN: 0263-8223, DOI: 10.1016/J.COMPSTRUCT.2011.12.003
- SORIANO I ET AL: "3D fibre architecture of fibre-reinforced sand", GRANULAR MATTER, SPRINGER-VERLAG, HEIDELBERG, DE, vol. 19, no. 4, 18 septembre 2017 (2017-09-18), pages 1-14, XP036360771, ISSN: 1434-5021, DOI: 10.1007/S10035-017-0760-3 [extrait le 2017-09-18]
- T. SHINOHARA ET AL: "Extraction of Yarn Positional Information from a Three-dimensional CT Image of Textile Fabric using Yarn Tracing with a Filament Model for Structure Analysis", TEXTILE RESEARCH JOURNAL, vol. 80, no. 7, 18 septembre 2009 (2009-09-18), pages 623-630, XP055359169, GB ISSN: 0040-5175, DOI: 10.1177/0040517509342320

## Description

### DOMAINE TECHNIQUE DE L'INVENTION

Le domaine technique de l'invention est celui des matériaux composites et plus particulièrement celui des procédés de reconstitution de l'architecture du renfort d'un matériau composite.

La présente invention concerne un procédé de reconstitution de l'architecture du renfort d'un matériau composite et en particulier un procédé de reconstitution automatique de l'architecture du renfort d'un matériau composite. La présente invention concerne également un produit-programme d'ordinateur et un support d'enregistrement permettant de mettre en oeuvre le procédé de reconstitution.

### ARRIERE-PLAN TECHNOLOGIQUE DE L'INVENTION

Dans le domaine des matériaux composites, la reconstitution de l'architecture du renfort d'un matériau composite par l'identification de chaque fil du renfort, également appelé mèche ou toron, dans le volume du matériau composite, est un excellent moyen d'avoir accès à la géométrie interne réelle du matériau. En particulier, la reconstitution de la fibre neutre de chaque fil du renfort, c'est-à-dire de la ligne reliant les barycentres sur l'ensemble de la longueur de chaque fil du renfort, permet d'obtenir la topologie de tissage pour pouvoir par exemple rechercher des anomalies de tissage, et la reconstitution de l'enveloppe de chaque fil de renfort permet d'obtenir la morphologie du textile indispensable pour le calcul des propriétés thermo-physiques et thermomécaniques locales. L'identification de chaque fil du renfort permet également de discriminer chaque fil du renfort qui peuvent avoir des tailles différentes, c'est-à-dire être composés d'un nombre de fibres différent.

Il est alors possible de détecter une pièce défectueuse dès sa sortie de fabrication ou de quantifier l'usure d'une pièce réalisée en matériau composite.

Actuellement, la reconstitution est réalisée à l'aide d'images tomographiques sur lesquelles, soit un opérateur a manuellement, soit un algorithme de traitement d'images a automatiquement, identifié le barycentre de la section de chaque mèche/fil/toron du renfort.

Une telle reconstruction est présentée, par exemple, dans le document WO2015/024580.

Dans les deux cas, l'opération est extrêmement chronophage, une simple aube LEAP^{™} comportant plusieurs milliers de fils de carbone, et donc sujette à de nombreuses erreurs car il est parfois impossible, même à l'oeil nu, de distinguer des fils du renfort les uns des autres tant leur densité est grande.

Il existe donc un besoin d'obtenir une méthode de reconstitution de l'architecture du renfort d'un matériau composite qui soit automatique et qui présente un risque d'erreurs réduit.

### RESUME DE L'INVENTION

L'invention offre une solution aux problèmes évoqués précédemment, en permettant d'obtenir automatiquement un modèle numérique précis du renfort d'un matériau composite.

Un premier aspect de l'invention concerne un procédé de reconstitution automatique de l'architecture, selon un axe de renfort, du renfort d'un matériau composite, le renfort comprenant une pluralité de fils de renfort agencés selon l'axe de renfort, le procédé comportant les étapes suivantes :
- Acquisition d'une pluralité d'images du renfort du matériau composite, chaque image étant acquise selon un plan de section parallèle et non confondu aux plans de section des autres images acquises, à chaque image acquise étant associée une position sur l'axe de renfort perpendiculaire aux plans de section ;
- Pour chaque image acquise, détection, à l'aide d'un premier réseau de neurones artificiels entraîné avec une première base de données d'entraînement, du barycentre de chaque section de fil de renfort présente dans l'image acquise et/ou détection, à l'aide d'un deuxième réseau de neurones artificiels entraîné avec une deuxième base de données d'entraînement, de la circonférence de la section de chaque fil de renfort présente dans l'image acquise ;
- Pour au moins une image acquise, dite image acquise de référence, choisie parmi les images acquises, affectation d'un label correspondant à un fil de renfort, à chaque barycentre détecté ou à chaque circonférence détectée dans l'image acquise de référence ;
- Pour chaque image acquise n'ayant pas été choisie comme image acquise de référence, attribution, à chaque barycentre détecté et/ou à chaque circonférence détectée dans l'image acquise, du label du barycentre ou de la circonférence correspondant dans l'image acquise de référence ;
- Reconstitution de l'architecture de chaque fil de renfort agencé selon l'axe de renfort à partir de chaque barycentre détecté et/ou de chaque circonférence détectée ayant le label du fil de renfort et de la position sur l'axe de renfort associée à l'image acquise sur laquelle le barycentre a été détecté et/ou la circonférence a été détectée.

Grâce à l'invention, le premier réseau de neurones artificiels permet de détecter automatiquement le barycentre de chaque section de fil de renfort présente dans les images acquises et/ou le deuxième réseau de neurones artificiels permet de détecter automatiquement la circonférence de chaque section de fil de renfort présente dans les images acquises. La labellisation permet de lier chaque barycentre détecté et/ou chaque circonférence détectée à un fil de renfort pour pouvoir reconstituer automatiquement sa trajectoire et/ou son enveloppe.

En comparant la trajectoire reconstituée d'un fil de renfort et la trajectoire correspondante dans le modèle de tissage d'une pièce, il est alors possible de déceler une anomalie de tissage présente dans le renfort de la pièce dès sa sortie de fabrication. Cette opération permet donc l'extraction automatisée de la topologie du textile et ainsi de la comparer avec la topologie ciblée.

La forme de l'enveloppe d'un fil de renfort permet d'avoir des informations géométriques locales indispensables à l'évaluation de ses propriétés mécaniques. En effet, connaissant le nombre de fibres qui constituent un fil et le volume de ce dernier, on peut déterminer le taux volumique de fibres qu'il contient localement, influençant directement ses propriétés thermo-mécaniques. Ainsi, si on effectue plusieurs reconstructions d'un même matériau composite soumis à des contraintes extérieures différentes, on est alors capable de connaître la déformation surfacique que subit le fil en fonction des conditions extérieures qui lui sont appliquées et ainsi alimenter en données des lois permettant de traduire son comportement mécanique.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon une variante de réalisation, le premier et/ou le deuxième réseau de neurones artificiels sont des perceptrons multi-couches ou des réseaux de neurones artificiels convolutifs.

Selon une variante de réalisation compatible avec la variante de réalisation précédente, la première et la deuxième base de données d'entraînement comportent chacune une pluralité d'images d'au moins un matériau composite d'entraînement acquises chacune selon un plan de section perpendiculaire à un axe de renfort du matériau composite d'entraînement.

Ainsi, les premier et deuxième réseaux de neurones artificiels sont entraînés sur des images similaires aux images acquises sur lesquelles ils réalisent leurs détections.

Selon une variante de réalisation compatible avec les variantes de réalisation précédentes, l'étape d'attribution est réalisée à l'aide d'un algorithme de regroupement.

Selon une variante de réalisation compatible avec les variantes de réalisation précédentes, les images sont acquises par un système d'imagerie 3D ayant une résolution supérieure à un seuil.

Selon une sous-variante de réalisation de la variante de réalisation précédente, le seuil est de 150 µm pour les images acquises pour la détection des barycentres ou de 40 µm pour les images acquises pour la détection des circonférences.

Selon une sous-variante de réalisation de la variante de réalisation précédente compatible avec la sous-variante de réalisation précédente, les images sont acquises par imagerie par rayonnement synchrotron, par imagerie par microscope électronique à transmission ou par tomographie par rayons X.

Un deuxième aspect de l'invention concerne un procédé de reconstitution automatique de l'architecture du renfort d'un matériau composite, comportant :
- pour chaque axe de renfort du matériau composite, les étapes du procédé de reconstitution automatique de l'architecture du renfort du matériau composite selon l'axe de renfort, selon le premier aspect de l'invention
- une étape de reconstitution de l'architecture du renfort du matériau composite à partir de l'architecture de chaque fil de renfort selon chaque axe de renfort.

Ainsi, il est possible de reconstituer le renfort d'un matériau composite en reconstituant la trajectoire et/ou l'enveloppe de chaque fil du renfort et d'ainsi pouvoir obtenir la topologie de tissage et/ou calculer des propriétés thermo-mécaniques sur l'ensemble du renfort.

Un troisième aspect de l'invention concerne un produit-programme d'ordinateur comprenant des instructions qui, lorsque le programme est exécuté par un ordinateur, conduisent celui-ci à mettre en oeuvre les étapes du procédé selon le premier et/ou le deuxième aspect de l'invention.

Un quatrième aspect de l'invention concerne un support d'enregistrement lisible par ordinateur comprenant des instructions qui, lorsqu'elles sont exécutées par un ordinateur, conduisent celui-ci à mettre en oeuvre les étapes du procédé selon le premier et/ou le deuxième aspect de l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une reconstruction tri-dimensionnelle de l'architecture du renfort d'un matériau composite à partir d'images de tomographie par rayons X.
- La figure 2 montre une représentation schématique d'une partie du renfort d'un matériau composite, à gauche et d'un fil de renfort isolé, à droite.
- La figure 3 montre une image de tomographie par rayons X du renfort d'un matériau composite acquise lors de la première étape du procédé selon le premier aspect de l'invention.
- La figure 4 montre une image de tomographie par rayons X du renfort d'un matériau composite acquise lors de la première étape du procédé selon le premier aspect de l'invention sur laquelle sont indiqués les barycentres détectés lors de la deuxième étape du procédé selon le premier aspect de l'invention.
- La figure 5 montre une image de tomographie par rayons X du renfort d'un matériau composite acquise lors de la première étape du procédé selon le premier aspect de l'invention sur laquelle sont indiquées les circonférences détectées lors de la troisième étape du procédé selon le premier aspect de l'invention.
- La figure 6 montre une représentation schématique d'une image de référence labellisée lors de la quatrième étape du procédé selon le premier aspect de l'invention et d'une image présentant des sections de fil de renfort auxquelles vont être affectés des labels lors de la cinquième étape du procédé selon le premier aspect de l'invention.
- La figure 7 représente la position de chaque barycentre détecté lors de la deuxième étape du procédé selon le premier aspect de l'invention dans un repère défini à partir de l'axe de renfort et d'un axe parallèle aux plans de section.
- La figure 8 est un schéma synoptique illustrant les étapes du procédé selon le premier aspect de l'invention.
- La figure 9 est un schéma synoptique illustrant les étapes du procédé selon le deuxième aspect de l'invention.

### DESCRIPTION DETAILLEE

Sauf précision contraire, un même élément apparaissant sur des figures différentes présente une référence unique.

Un premier aspect de l'invention concerne un procédé de reconstitution automatique de l'architecture du renfort d'un matériau composite selon un axe de renfort.

Un matériau composite est un assemblage comportant au moins une ossature appelée renfort, comportant des fils de renfort, encore appelés mèches ou torons, et un liant appelée matrice, constituée généralement d'une matière plastique.

Un fil de renfort est composé d'une pluralité de fibres de renfort.

Les fils de renfort sont agencés selon au moins un axe, appelé axe de renfort.

Le renfort est par exemple une superposition de plis de renfort comprenant des fils de renfort.

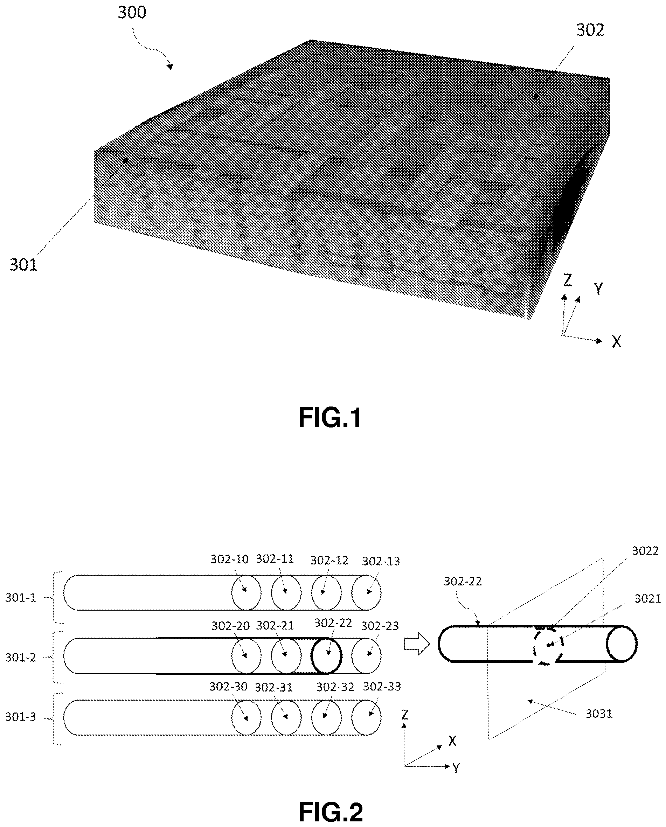

[Fig. 1] La figure 1 montre une reconstruction tri-dimensionnelle de l'architecture du renfort 300 d'un matériau composite à partir d'images de tomographie par rayons X.

Sur la figure 1, le pli de renfort 301 supérieur est constitué de fils de renfort 302 agencés selon un axe Y et de fils de renfort 302 agencés selon un axe X. Les axes X et Y sont donc les axes de renfort du renfort 300 représenté à la figure 1.

Sur la figure 1, les axes de renfort X et Y sont sensiblement perpendiculaires mais les plis de renfort 301 peuvent comporter des fils de renfort 302 agencés selon des axes de renfort formant un angle différent de 90°. Par exemple, les axes de renfort X, Y peuvent former un angle de 45°.

[Fig. 2] La figure 2 montre une représentation schématique d'une partie du renfort 300 d'un matériau composite.

Sur la figure 2, la partie du renfort 300 comporte trois plis de renfort 301-1, 301-2 et 301-3. Le premier pli de renfort 301-1 comporte quatre fils de renfort 302-10, 302-11, 302-12, 302-13, le deuxième pli de renfort 301-2 comporte quatre fils de renfort 302-20, 302-21, 302-22, 302-23 et le troisième pli de renfort 301-3 comporte quatre fils de renfort 302-30, 302-31, 302-32, 302-33, chaque fil de renfort 302-10, 302-11, 302-12, 302-13, 302-20, 302-21, 302-22, 302-23, 302-30, 302-31, 302-32, 302-33 étant agencé selon l'axe de renfort Y.

Les plis de renfort 301 d'un même renfort 300 peuvent avoir des axes de renfort X, Y différents. Par exemple, le renfort 300 comprend deux types de plis de renfort 301, le premier et le deuxième type de pli de renfort 301 comportant chacun deux axes de renfort X, Y formant un angle de 45° et étant superposés de manière que les axes de renfort X, Y du premier type forment un angle de 45° avec les axes de renfort X, Y du deuxième type, le renfort 300 comporte alors quatre axes de renfort différents.

On entend par « reconstitution de l'architecture du renfort d'un matériau composite », l'obtention d'un modèle numérique de l'architecture du renfort du matériau composite permettant ensuite d'effectuer des caractérisations numériques du matériau composite, par exemple les propriétés thermo-physiques et/ou thermomécaniques en chaque point du renfort ou encore la localisation d'anomalies de tissage.

Le procédé selon un premier aspect de l'invention permet d'obtenir une reconstitution de l'architecture du renfort 300 du matériau composite selon un axe de renfort, par exemple dans le cas de la figure 1, selon l'axe X ou selon l'axe Y et dans le cas de la figure 2, selon l'axe Y.

Dans la suite de la description, le procédé selon le premier aspect de l'invention sera appliqué à l'axe de renfort Y, c'est-à-dire que l'architecture du renfort 300 du matériau composite sera déterminée selon l'axe de renfort Y.

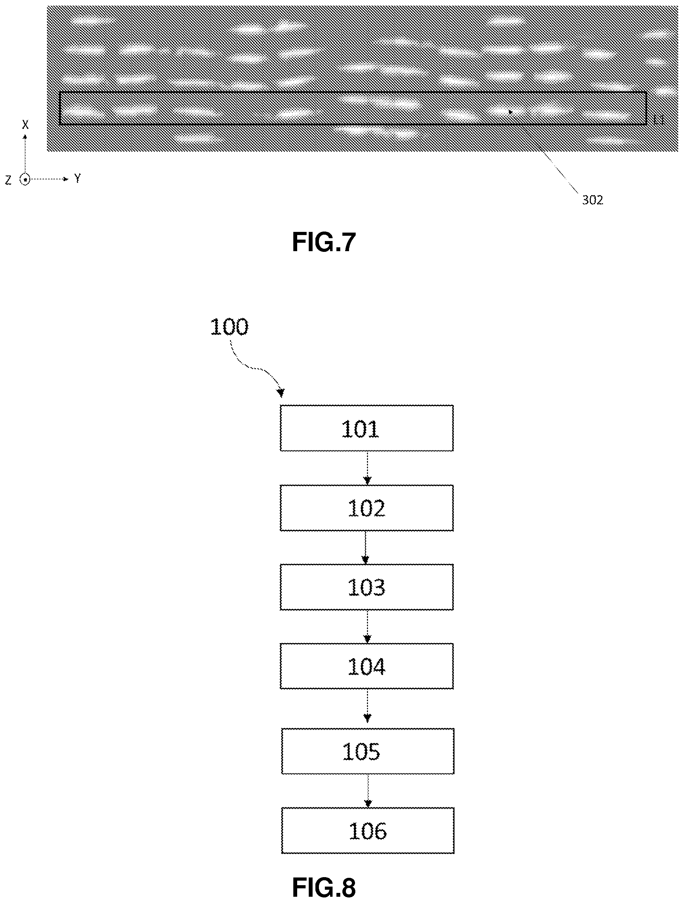

[Fig. 8] La figure 8 est un schéma synoptique illustrant les étapes du procédé 100 selon le premier aspect de l'invention.

Une première étape 101 du procédé 100 consiste à acquérir une pluralité d'images du renfort 300 du matériau composite.

Les images sont par exemple acquises par un système d'imagerie 3D ayant une résolution supérieure à un seuil, par exemple un système d'imagerie par rayonnement synchrotron ou d'imagerie par microscope électronique à transmission ou par tomographie par rayons X.

Chaque image est acquise selon un plan de section perpendiculaire à l'axe de renfort Y.

La figure 2 montre une représentation schématique d'un fil de renfort 302-22 isolé, agencé selon l'axe de renfort Y et intersecté par un plan de section 3031 perpendiculaire à l'axe de renfort Y.

Comme illustré sur la figure 2, une image acquise selon le plan de section 3031 comprend une section du fil de renfort 302. Cette section peut être définie par son barycentre 3021 et sa circonférence 3022.

Le seuil de résolution du système d'imagerie 3D est par exemple de 150 µm pour pouvoir détecter les barycentres 3021 de fils de renfort 302 dans une image acquise 303 et de 40 µm pour pouvoir détecter les circonférences 3022 de fils de renfort 302 dans une image acquise 303.

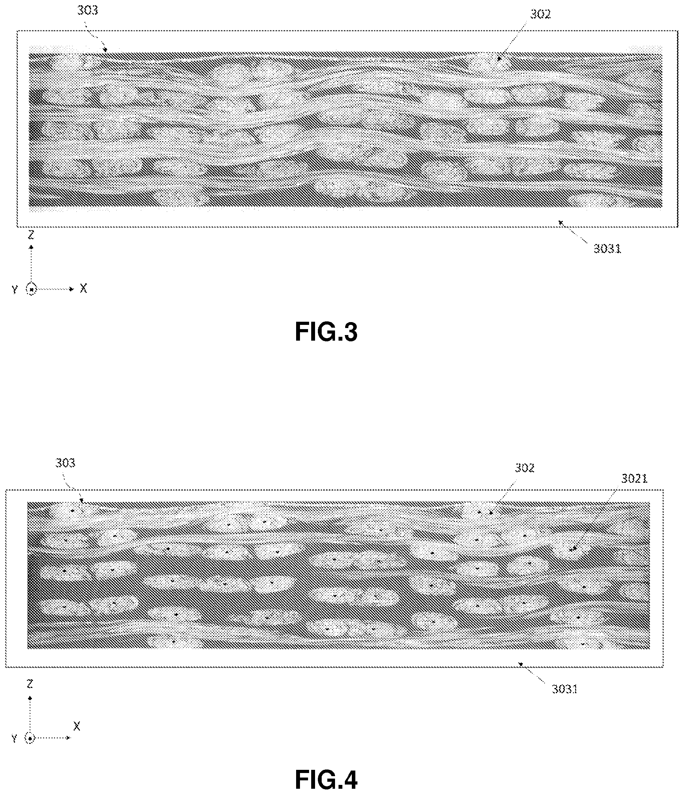

[Fig. 3] La figure 3 représente une image 303 acquise par tomographie par rayon X lors de la première étape 101 du procédé 100.

L'image 303 est acquise selon un plan de section 3031 comprenant les axes X et Z et perpendiculaire à l'axe de renfort Y. L'image 303 comporte une pluralité de section de fils de renfort 302.

Les plans de section 3031 des images 303 acquises lors de la première étape 101 sont parallèles entre eux et non confondus, c'est-à-dire que les plans de section 3031 sont espacés entre eux selon l'axe de renfort Y. Chaque plan de section 3031 peut donc être associé à une position sur l'axe de renfort Y.

Par exemple, si l'on réalise l'acquisition de trois images 303 perpendiculairement à l'axe de renfort Y selon des plans de section 3031 espacés chacun d'1 mm, la première image 303 est par exemple associée à la position 0 mm sur l'axe de renfort Y, la deuxième image 303 à la position 1 mm sur l'axe de renfort Y et la troisième image 303 à la position 2 mm sur l'axe de renfort Y.

Les plans de section 3031 peuvent être ou non espacés d'une même distance selon l'axe de renfort Y.

Une deuxième étape 102 du procédé 100 consiste à utiliser un premier réseau de neurones artificiels entraîné avec une première base de données d'entraînement pour détecter le barycentre 3021 de chaque section de fil de renfort 302 dans chaque image 303 précédemment acquise.

Un réseau de neurones artificiels comporte au moins une couche de neurones artificiels comportant chacune au moins un neurone artificiel. Les neurones artificiels du réseau de neurones artificiels sont reliés entre eux par des synapses et à chaque synapse est affecté un coefficient synaptique.

L'entraînement permet d'entraîner le réseau de neurones artificiels à une tâche prédéfinie, en mettant à jour les coefficients synaptiques de manière à minimiser l'erreur entre la donnée de sortie fournie par le réseau de neurones artificiels et la vraie donnée de sortie, c'est-à-dire ce que le réseau de neurones artificiels devrait fournir en sortie pour remplir la tâche prédéfinie sur une certaine donnée d'entrée.

Une base de données d'entraînement comporte donc des données d'entrée, chacune associée à une vraie donnée de sortie.

Le premier réseau de neurones artificiels a pour fonction de détecter le barycentre 3021 de chaque section de fil de renfort 302 présente dans une image 303 acquise selon un plan de section perpendiculaire à l'axe de renfort Y.

La première base de données d'entraînement comporte donc des images d'un même ou de plusieurs matériaux composites d'entraînement, acquises chacune selon un plan de section perpendiculaire à un axe de renfort du matériau composite d'entraînement, ainsi que des données sur la position des barycentres 3021 de chaque section de fil de renfort 302 dans chaque image 303.

Le ou les matériaux composites d'entraînement peuvent être identiques ou différents du matériau composite dont on veut reconstituer l'architecture du renfort 300.

Grâce au procédé 100 selon le premier aspect de l'invention, il est possible de reconstituer l'architecture du renfort 300 d'un matériau composite avant assemblage avec la matrice ou après assemblage avec la matrice.

Les images de la première base de données d'entraînement peuvent donc être des images de renforts 300 de matériaux composites avant assemblage avec leurs matrices et/ou des images de renforts 300 de matériaux composites après assemblage avec leurs matrices.

[Fig. 4] La figure 4 représente une image 303 acquise par tomographie par rayon X lors de la première étape 101 du procédé 100. Le barycentre 3021 de chaque section de fil de renfort 302 y est indiqué.

Comme dans la figure 3, l'image 303 de la figure 4 a été acquise selon un plan de section 3031 comprenant les axes X et Z, perpendiculairement à l'axe de renfort Y.

A chaque barycentre 3021 détecté dans l'image 303 est associée une position dans le plan de section 3031, c'est-à-dire dans le repère défini par les axes X et Z.

Une troisième étape 103 du procédé 100 consiste à utiliser un deuxième réseau de neurones artificiels entraîné avec une deuxième base de données d'entraînement pour détecter la circonférence 3022 de chaque section de fil de renfort 302 dans chaque image 303 précédemment acquise.

Le deuxième réseau de neurones artificiels a pour fonction de détecter la circonférence 3022 de chaque section de fil de renfort 302 présente dans une image 303 acquise selon un plan de section 3031 perpendiculaire à l'axe de renfort Y.

La deuxième base de données d'entraînement comporte donc des images du ou des matériaux composites d'entraînement, acquises chacune selon un plan de section perpendiculaire à un axe de renfort du matériau composite d'entraînement, ainsi que des données sur la position des différents points de la circonférence 3022 de chaque section de fil de renfort 302 dans chaque image 303.

Les images de la première base de données d'entraînement peuvent être identiques aux images de la deuxième base de données d'entraînement.

Les données sur la position des barycentres 3021 comprises dans la première base de données d'entraînement et les données sur la position des points de la circonférence 3022 comprises dans la deuxième base de données d'entraînement peuvent être obtenues manuellement ou par des algorithmes de traitement d'images utilisant par exemple des algorithmes de morphologie mathématique.

Le premier et le deuxième réseaux de neurones artificiels sont par exemple des perceptrons multi-couches ou des réseaux de neurones artificiels convolutifs.

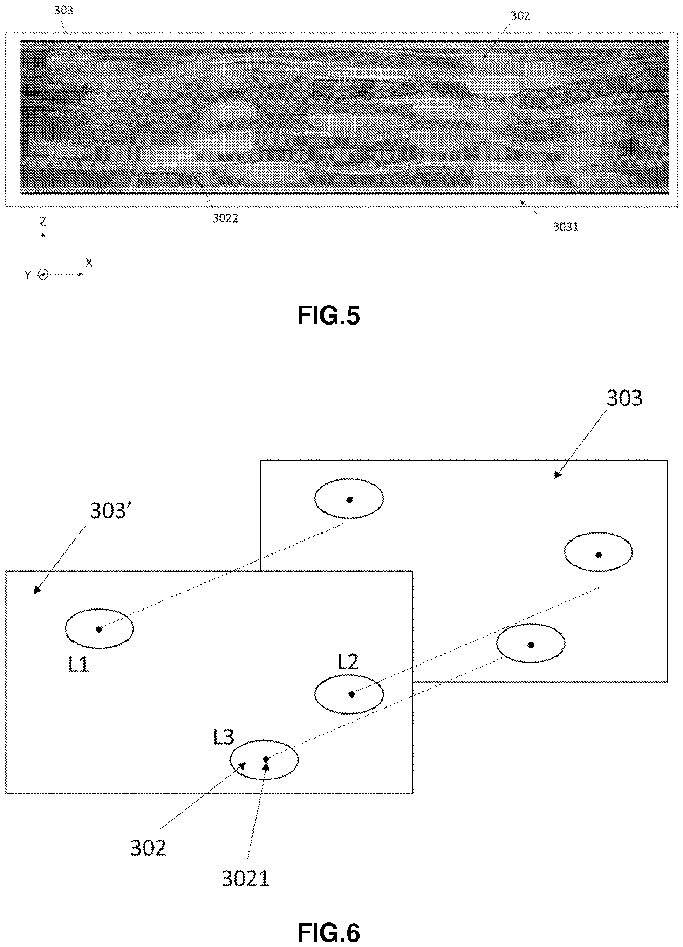

[Fig. 5] La figure 5 représente une image 303 acquise par tomographie par rayon X lors de la première étape 101 du procédé 100. La circonférence 3022 de chaque section de fil de renfort 302 a été indiquée dans l'image 303.

Comme dans les figures 3 et 4, l'image 303 de la figure 5 a été acquise selon un plan de section 3031 comprenant les axes X et Z perpendiculairement à l'axe de renfort Y.

A chaque point de la circonférence 3022 détecté est associée une position dans le plan de section 3031, c'est-à-dire dans le repère défini par les axes X et Z.

La deuxième étape 102 ou troisième étape 103 du procédé 100 peuvent être optionnelles, c'est-à-dire que l'on peut reconstituer l'architecture du renfort 300 du matériau composite en effectuant uniquement la deuxième étape 102 ou en effectuant uniquement la troisième étape 103 ou en effectuant la deuxième étape 102 et la troisième étape 103.

Une quatrième étape 104 du procédé 100 consiste à affecter un label, ou « tag » en anglais, correspondant à un fil de renfort 302 à chaque barycentre 3021 détecté dans une ou plusieurs images 303 précédemment acquises choisies comme images de référence si la deuxième étape 102 a été précédemment effectuée ou à chaque circonférence 3022 détectée dans une ou plusieurs images 303 précédemment acquises choisies comme images de référence si la troisième étape 103 a été précédemment effectuée.

Autrement dit, lors de la quatrième étape 104, les labels sont affectés soit à chaque barycentre 3021 dans les images de référence dans le cas où seule la deuxième étape 102 est réalisée ou dans le cas où les deuxième 102 et troisième étape 103 sont réalisées, soit à chaque circonférence 3022 dans les images de référence dans le cas où seule la troisième étape 103 est réalisée ou dans le cas où les deuxième 102 et troisième étape 103 sont réalisées.

On entend par « label affecté à un élément », une étiquette affectée à un élément permettant de l'identifier et de le distinguer d'autres éléments.

Une image acquise de référence est par exemple sélectionnée toutes les N images 303 acquises. Par exemple, si l'on a 20 images 303 acquises et que l'on veut sélectionner une image acquise de référence toutes les 5 images, on peut par exemple sélectionner la première image 303 acquise, la sixième image 303 acquise, la onzième image 303 acquise et la seizième image 303 acquise.

[Fig. 6] La figure 6 montre une représentation schématique d'une image acquise de référence 303'. L'image acquise de référence 303' comprend trois sections de fils de renfort 302 et donc trois barycentres 3021. A chaque barycentre 3021 est associé un label L1, L2 ou L3. Ainsi, le premier barycentre 3021 situé vers le coin supérieur gauche correspond au label L1, le deuxième barycentre 3021 situé vers le milieu droit au label L2 et le troisième barycentre 3021 situé vers le milieu bas au label L3.

Une cinquième étape 105 du procédé 100 consiste à attribuer, pour chaque image 303 acquise n'ayant pas été sélectionnée comme image acquise de référence 303', à chaque barycentre 3021 présent dans l'image 303 acquise si la deuxième étape 102 a été précédemment effectuée et/ou à chaque circonférence 3022 présente dans l'image 303 acquise si la troisième étape 103 a été précédemment effectuée, le label du barycentre 3021 et/ou de la circonférence 3022 correspondant dans l'image acquise de référence 303' ayant été attribué à la quatrième étape 104.

Autrement dit, si durant la quatrième étape 104, les labels ont été affectés aux barycentres 3021 dans les images de référence, la cinquième étape 105 consiste à attribuer, pour chaque image 303 acquise n'ayant pas été sélectionnée comme image acquise de référence 303', à chaque barycentre 3021 présent dans l'image 303 acquise le label du barycentre 3021 correspondant dans l'image acquise de référence et si la troisième étape 103 a également été effectuée, à attribuer, pour chaque image 303 acquise n'ayant pas été sélectionnée comme image acquise de référence 303', à chaque circonférence 3022 présente dans l'image 303 acquise le label du barycentre 3021 correspondant dans l'image acquise de référence.

Si durant la quatrième étape 104, les labels ont été affectés aux circonférences 3022 dans les images de référence, la cinquième étape 105 consiste à attribuer, pour chaque image 303 acquise n'ayant pas été sélectionnée comme image acquise de référence 303', à chaque circonférence 3022 présente dans l'image 303 acquise le label de la circonférence 3022 correspondant dans l'image acquise de référence et si la deuxième étape 102 a également été effectuée, à attribuer, pour chaque image 303 acquise n'ayant pas été sélectionnée comme image acquise de référence 303', à chaque barycentre 3021 présent dans l'image 303 acquise le label de la circonférence 3022 correspondant dans l'image acquise de référence.

Par exemple, dans le cas où la labellisation a été effectuée sur les barycentres 3021, si dans l'image de référence 303' acquise juste avant l'image 303 sur laquelle on réalise la quatrième étape 104, six barycentres 3021 ont été labellisés, chacun des six barycentres 3021 détectés dans l'image 303 acquise va être associé à l'un des barycentres 3021 labellisés dans l'image acquise de référence 303'.

Sur la figure 6, l'image acquise 303 comporte trois barycentres 3021, un premier barycentre 3021 situé dans le coin supérieur gauche, un deuxième barycentre 3021 situé vers le milieu droit et un troisième barycentre 3021 situé vers le milieu bas. En comparant l'image 303 acquise et l'image acquise de référence 303' immédiatement précédente, on peut associer le barycentre 3021 situé dans le coin supérieur gauche au label L1, le barycentre 3021 situé vers le milieu bas au label L3 et le barycentre 3021 situé vers le milieu droit au label L2, par exemple en sélectionnant le label correspondant au barycentre 3021 de l'image acquise de référence 303' ayant une distance minimale avec la position du barycentre 3021 détecté dans l'image 303 acquise.

La cinquième étape 105 est par exemple réalisée par un algorithme de regroupement, par exemple l'algorithme DBSCAN.

A l'issue de la cinquième étape 105, les barycentres 3021 et/ou les circonférences 3022 de chaque image 303 acquise sont labellisé(e)s. Les barycentres 3021 et/ou les circonférences 3022 ayant le même label correspondent à un même fil de renfort 302.

Une sixième étape 106 du procédé 100 consiste à reconstituer l'architecture de chaque fil de renfort 302 agencée selon l'axe de renfort Y.

Dans le cas où la deuxième étape 102 du procédé 100 est réalisée, la reconstitution de l'architecture de chaque fil de renfort 302 est effectuée à partir de la position, dans son plan de section 3031, de chaque barycentre 3021 ayant le label du fil de renfort 302 et de la position sur l'axe de renfort Y associée au plan de section 3031 et donc à l'image 303 acquise dans laquelle le barycentre 3021 a été détecté.

Si l'on reprend l'exemple simple de l'acquisition de trois images 303 selon des plans espacés chacun d'1 mm, si l'on connaît la position du barycentre 3021 du fil de renfort 302 dans chacune des images 303 acquises selon un plan de section 3031 perpendiculaire à l'axe de renfort Y, il est possible d'approximer la trajectoire du fil de renfort 302.

Par exemple, si le barycentre 3021 du fil de renfort 302 est situé au point de coordonnées (X1, Z1) dans un repère défini par les axes X et Z dans la première image 303, puis au point de coordonnées (X2, Z2) dans la deuxième image 303 et puis au point de coordonnées (X3, Z3) dans la troisième image 303, on sait que le fil de renfort 302 a une trajectoire passant par le point (X1, Z1) à la position 0 mm sur l'axe de renfort Y, par le point (X2, Z2) à la position 1 mm et par le point (X3, Z3) à la position 2 mm.

Ainsi, en minimisant l'espacement entre les plans de section 3031 des différentes images 303 acquise, on améliore la précision de l'approximation de la trajectoire du fil de renfort 302.

[Fig.7] La figure 7 représente la position de chaque barycentre 3021 détecté lors de la deuxième étape 102 du procédé 100 dans un repère défini à partir de l'axe de renfort Y et d'un axe X parallèle aux plans de section 3031.

Si l'on reprend l'exemple précédent, cela revient à placer les trois barycentres 3021 dans le repère défini par les axes X et Y, c'est-à-dire à placer les points X1, X2, X3 en fonction de la distance associée à l'image 303 acquise sur l'axe de renfort Y.

Sur la figure 7, pour une valeur donnée selon l'axe X, jusqu'à 4 barycentres 3021 sont représentés, ce qui signifie qu'il y a jusqu'à quatre fils de renfort 302 différents.

En ajoutant les informations concernant les labels associés aux barycentres 3021 comme sur la figure 7 pour le fil de renfort 302 associée au label L1, il est possible de discriminer les trajectoires des différents fils de renfort 302.

Dans le cas où la troisième étape 103 du procédé 100 est réalisée, la reconstitution de l'architecture de chaque fil de renfort 302 est effectuée à partir de la position, dans son plan de section 3031, de chaque point de la circonférence 3022 ayant le label du fil de renfort 302 et de la position sur l'axe de renfort Y associée au plan de section 3031 et donc à l'image 303 acquise dans laquelle le barycentre 3021 a été détecté.

Si les deuxième 102 et troisième 103 étapes ont été réalisées, il est alors possible de compléter la figure 7 en reportant la dimension du fil de renfort 302 selon l'axe X.

Un deuxième aspect de l'invention concerne un procédé de reconstitution automatique de l'architecture complète du renfort 300 du matériau composite.

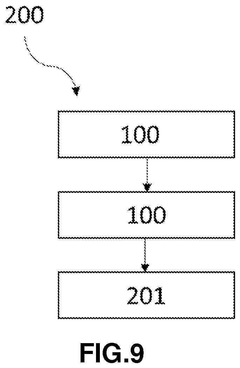

[Fig. 9] La figure 9 est un schéma synoptique illustrant les étapes du procédé 200 selon le deuxième aspect de l'invention.

Le procédé 200 comporte les étapes du procédé 100 selon le premier aspect de l'invention pour chaque axe de renfort X, Y du renfort 300.

Si, comme dans l'exemple décrit précédemment, le renfort 300 comporte quatre axes de renfort, le procédé selon le deuxième aspect de l'invention comporte les étapes du procédé 100 selon le premier aspect de l'invention pour chacun des quatre axes de renfort.

Sur la figure 9, les étapes du procédé 100 sont réalisées deux fois, ce qui signifie que le renfort 100 dont on veut reconstituer l'architecture présente deux axes de renfort X, Y.

A l'issue de ces étapes, l'architecture de chaque fil de renfort 302 est connue puisque chaque fil de renfort 302 est agencée selon l'un quelconque des axes de renfort X, Y.

La dernière étape 201 consiste alors à reconstituer l'architecture complète du renfort 300 du matériau composite à partir de l'architecture de chaque fil de renfort 302 du renfort 300.

Par exemple, pour reconstituer l'architecture 3D du renfort 300 comme sur la figure 1, il suffit de placer chaque fil de renfort 302 dans le repère défini par les axes, X, Y et Z.

## Revendications

1. Procédé (100) de reconstitution automatique de l'architecture, selon un axe de renfort (X, Y), du renfort (300) d'un matériau composite, le renfort (300) comprenant une pluralité de fils de renfort (302) agencées selon l'axe de renfort (X, Y), le procédé (100) comprenant une étape de
- Acquisition (101) d'une pluralité d'images (303) du renfort (300) du matériau composite, chaque image (303) étant acquise selon un plan de section (3031) parallèle et non confondu aux plans de section (3031) des autres images (303) acquises, à chaque image (303) acquise étant associée une position sur l'axe de renfort (X, Y) perpendiculaire aux plans de section (3031), le procédé étant **caractérisé en ce qu'**il comprend les étapes suivantes :
- Pour chaque image (303) acquise, détection (102), à l'aide d'un premier réseau de neurones artificiels entraîné avec une première base de données d'entraînement, du barycentre (3021) de chaque section de fil de renfort (302) présent dans l'image (303) acquise et/ou détection (103), à l'aide d'un deuxième réseau de neurones artificiels entraîné avec une deuxième base de données d'entraînement, de la circonférence (3022) de la section de chaque fil de renfort (302) présente dans l'image (303) acquise;
- Pour au moins une image acquise, dite image (303') acquise de référence, choisie parmi les images (303) acquises, affectation (104) d'un label correspondant à une fil de renfort (302) à chaque barycentre (3021) détecté ou à chaque circonférence (3022) détectée dans l'image (303') acquise de référence ;
- Pour chaque image (303) acquise n'ayant pas été choisie comme image (303') acquise de référence, attribution (105), à chaque barycentre détecté (3021) et/ou à chaque circonférence (3022) détectée dans l'image (303) acquise, du label du barycentre (3021) ou de la circonférence (3022) correspondant dans l'image (303') acquise de référence ;
- Reconstitution (106) de l'architecture de chaque fil de renfort (302) agencé selon l'axe de renfort (X, Y) à partir de chaque barycentre (3021) détecté et/ou de chaque circonférence (3022) détectée ayant le label du fil de renfort (302) et de la position sur l'axe de renfort (X, Y) associée à l'image (303) acquise sur laquelle le barycentre (3021) a été détecté et/ou la circonférence (3022) a été détectée.

2. Procédé (100) selon la revendication 1, **caractérisé en ce que** le premier et le deuxième réseau de neurones artificiels sont des perceptrons multi-couches et/ou des réseaux de neurones artificiels convolutifs.

3. Procédé (100) selon l'une quelconque des revendications précédentes , **caractérisé en ce que** la première et la deuxième base de données d'entraînement comportent chacune une pluralité d'images d'au moins un matériau composite d'entraînement acquises chacune selon un plan de section perpendiculaire à un axe de renfort du matériau composite d'entraînement.

4. Procédé (100) selon l'une quelconque des revendications précédentes, **caractérisé en ce que** l'étape d'attribution (105) est réalisée à l'aide d'un algorithme de regroupement.

5. Procédé (100) selon l'une quelconque des revendications précédentes, **caractérisé en ce que** les images (303) sont acquises par un système d'imagerie 3D ayant une résolution supérieure à un seuil.

6. Procédé (100) selon la revendication 5, **caractérisé en ce que** le seuil est de 150 µm pour les images (303) acquises pour la détection (102) des barycentres (3021) ou de 40 µm pour les images (303) acquises pour la détection (103) des circonférences (3022).

7. Procédé (100) selon l'une quelconque des revendications 5 ou 6, **caractérisé en ce que** les images (303) sont acquises par imagerie par rayonnement synchrotron, par imagerie par microscope électronique à transmission ou par tomographie par rayons X.

8. Procédé (200) de reconstitution automatique de l'architecture du renfort (300) d'un matériau composite, **caractérisé en ce qu'**il comporte :
- pour chaque axe de renfort (X, Y) du matériau composite, les étapes (101, 102, 103, 104, 105, 106) du procédé (100) de reconstitution automatique de l'architecture du renfort (300) du matériau composite selon l'axe de renfort (X, Y), selon l'une quelconque des revendications précédentes,
- une étape de reconstitution (201) de l'architecture du renfort (300) du matériau composite à partir de l'architecture de chaque fil de renfort (302) selon chaque axe de renfort (X, Y).

9. Produit-programme d'ordinateur comprenant des instructions qui, lorsque le programme est exécuté par un ordinateur, conduisent celui-ci à mettre en oeuvre les étapes du procédé (100, 200) selon l'une quelconque des revendications précédentes.

10. Support d'enregistrement lisible par ordinateur comprenant des instructions qui, lorsqu'elles sont exécutées par un ordinateur, conduisent celui-ci à mettre en oeuvre les étapes du procédé (100, 200) selon l'une quelconque des revendications 1 à 8.

## Patentansprüche

1. Verfahren (100) zur automatischen Rekonstruktion der Architektur entlang einer Verstärkungsachse (X, Y) der Verstärkung (300) eines Verbundmaterials, wobei die Verstärkung (300) eine Vielzahl von Verstärkungsfasern (302) umfasst, die entlang der Verstärkungsachse (X, Y) angeordnet sind, wobei das Verfahren (100) einen Schritt umfasst zum
- Erfassen (101) einer Vielzahl von Bildern (303) der Verstärkung (300) des Verbundmaterials, wobei jedes Bild (303) entlang einer Schnittebene (3031) erfasst wird, die parallel zu den Schnittebenen (3031) der anderen erfassten Bilder (303) verläuft und nicht mit diesen zusammenfällt, wobei jedem erfassten Bild (303) eine Position auf der Verstärkungsachse (X, Y) zugeordnet ist, die senkrecht zu den Schnittebenen (3031) verläuft, wobei das Verfahren **dadurch gekennzeichnet ist, dass** es die folgenden Schritte umfasst:
- Für jedes erfasste Bild (303), Erfassen (102), unter Verwendung eines ersten künstlichen neuronalen Netzwerks, das mit einer ersten Trainingsdatenbank trainiert wird, des Schwerpunkts (3021) jedes Abschnitts der Verstärkungsfaser (302), der in dem erfassten Bild (303) vorhanden ist, und/oder Erfassen (103), unter Verwendung eines zweiten künstlichen neuronalen Netzwerks, das mit einer zweiten Trainingsdatenbank trainiert wird, des Umfangs (3022) des Abschnitts jeder Verstärkungsfaser (302), der in dem erfassten Bild (303) vorhanden ist;
- Für mindestens ein erfasstes Bild, das als Referenzbild (303') bezeichnet wird und aus den erfassten Bildern (303) ausgewählt wird, Zuordnung (104) eines Labels, das einer Verstärkungsfaser (302) entspricht, zu jedem erfassten Schwerpunkt (3021) oder zu jedem erfassten Umfang (3022) in dem erfassten Referenzbild (303');
- Für jedes erfasste Bild (303), das nicht als erfasstes Referenzbild (303') ausgewählt wurde, Zuordnen (105) des Labels des entsprechenden Schwerpunkts (3021) oder Umfangs (3022) in dem als Referenz erfassten Bild (303') zu jedem erfassten Schwerpunkt (3021) und/oder zu jedem erfassten Umfang (3022) in dem erfassten Bild (303);
- Rekonstruktion (106) der Architektur jeder Verstärkungsfaser (302), die entlang der Verstärkungsachse (X, Y) angeordnet ist, aus jedem erfassten Schwerpunkt (3021) und/oder jedem erfassten Umfang (3022), der das Label der Verstärkungsfaser (302) hat, und der Position auf der Verstärkungsachse (X, Y), die dem erfassten Bild (303) zugeordnet ist, in dem der Schwerpunkt (3021) und/oder der Umfang (3022) erfasst wurden.

2. Verfahren (100) nach Anspruch 1, **dadurch gekennzeichnet, dass** das erste und das zweite künstliche neuronale Netzwerk mehrschichtige Perzeptrone und/oder gefaltete künstliche neuronale Netzwerke sind.

3. Verfahren (100) nach einem der vorhergehenden Ansprüche, **dadurch gekennzeichnet, dass** die erste und die zweite Trainingsdatenbank jeweils eine Vielzahl von Bildern von mindestens einem Trainingsverbundmaterial umfassen, die jeweils entlang einer Schnittebene senkrecht zu einer Verstärkungsachse des Trainingsverbundmaterials erfasst werden.

4. Verfahren (100) nach einem der vorhergehenden Ansprüche, **dadurch gekennzeichnet, dass** der Zuordnungsschritt (105) mithilfe eines Gruppierungsalgorithmus durchgeführt wird.

5. Verfahren (100) nach einem der vorhergehenden Ansprüche, **dadurch gekennzeichnet, dass** die Bilder (303) von einem 3D-Bildgebungssystem mit einer höheren Auflösung als ein Schwellenwert erfasst werden.

6. Verfahren (100) nach Anspruch 5, **dadurch gekennzeichnet, dass** der Schwellenwert 150 µm für die Bilder (303) beträgt, die für die Erfassung (102) der Schwerpunkte (3021) erfasst werden, bzw. 40 µm für die Bilder (303), die für die Erfassung (103) der Umfänge (3022) erfasst werden.

7. Verfahren (100) nach einem der Ansprüche 5 oder 6, **dadurch gekennzeichnet, dass** die Bilder (303) durch Synchrotronstrahlungs-Bildgebung, Transmissionselektronenmikroskop-Bildgebung oder Röntgentomographie erfasst werden.

8. Verfahren (200) zur automatischen Wiederherstellung der Architektur der Verstärkung (300) eines Verbundmaterials, **dadurch gekennzeichnet, dass** es Folgendes umfasst:
- für jede Verstärkungsachse (X ,Y) des Verbundmaterials die Schritte (101, 102, 103, 104, 105, 106) des Verfahrens (100) zur automatischen Rekonstruktion der Architektur der Verstärkung (300) des Verbundmaterials entlang der Verstärkungsachse (X, Y) gemäß einem der vorhergehenden Ansprüche,
- einen Schritt zur Rekonstruktion (201) der Architektur der Verstärkung (300) des Verbundmaterials aus der Architektur jeder Verstärkungsfaser (302) entlang jeder Verstärkungsachse (X, Y).

9. Computerprogrammprodukt mit Anweisungen, die, wenn das Programm von einem Computer ausgeführt wird, diesen dazu veranlassen, die Schritte des Verfahrens (100, 200) nach einem der vorhergehenden Ansprüche auszuführen.

10. Computerlesbares Aufzeichnungsträger, der Anweisungen enthält, die, wenn sie von einem Computer ausgeführt werden, diesen dazu veranlassen, die Schritte des Verfahrens (100, 200) nach einem der Ansprüche 1 bis 8 auszuführen.

## Claims

1. Method (100) for automatically reconstituting the architecture, along a reinforcing axis (X, Y), of the reinforcement (300) of a composite material, the reinforcement (300) comprising a plurality of reinforcing threads (302) arranged along the reinforcing axis (X, Y), the method (100) comprising a step:
- Acquiring (101) a plurality of images (303) of the reinforcement (300) of the composite material, each image (303) being acquired along a section plane (3031) parallel and not confounded with the section planes (3031) of the other images (303) acquired, each image (303) acquired being associated with a position on the reinforcing axis (X, Y) perpendicular to the section planes (3031);
The method (100) being **characterised in that** it comprises the following steps:
- For each image (303) acquired, detecting (102), using a first artificial neural network trained with a first training database, the barycentre (3021) of each section of reinforcing thread (302) present in the acquired image (303) and/or detecting (103), using a second artificial neural network trained with a second training database, the circumference (3022) of the section of each reinforcing thread (302) present in the acquired image (303);
- For at least one acquired image, referred to as acquired reference image (303'), chosen from the acquired images (303), assigning (104) a tag corresponding to a reinforcing thread (302) to each detected barycentre (3021) or to each detected circumference (3022) in the acquired reference image (303');
- For each image (303) acquired that was not chosen as an acquired reference image (303'), assigning (105), to each detected barycentre (3021) and/or to each detected circumference (3022) in the acquired image (303), the tag of the corresponding barycentre (3021) or of the corresponding circumference (3022) in the acquired reference image (303');
- Reconstituting (106) the architecture of each reinforcing thread (302) arranged along the reinforcing axis (X, Y) from each detected barycentre (3021) and/or from each detected circumference (3022) having the tag of the reinforcing thread (302) and the position on the reinforcing axis (X, Y) associated with the acquired image (303) on which the barycentre (3021) has been detected and/or the circumference (3022) has been detected.

2. Method (100) according to claim 1, **characterised in that** the first and second artificial neuron networks are multi-layer perceptrons and/or convolutional artificial neural networks.

3. Method (100) according to any preceding claim, **characterised in that** the first and the second training databases each comprise a plurality of images of at least one composite training material each acquired along a section plane perpendicular to a reinforcing axis of the composite training material.

4. Method (100) according to any preceding claim, **characterised in that** the step of assigning (105) is carried out using a clustering algorithm.

5. Method (100) according to any preceding claim, **characterised in that** the images (303) are acquired by a 3D imaging system that has a resolution higher than a threshold.

6. Method (100) according to claim 5, **characterised in that** the threshold is 150 µm for the images (303) acquired for the detection (102) of the barycentres (3021) or 40 µm for the images (303) acquired for the detection (103) of the circumferences (3022).

7. Method (100) according to any of claims 5 or 6, **characterised in that** the images (303) are acquired by synchrotron radiation imaging, by transmission electron microscopy imaging or by X-ray tomography.

8. Method (200) for automatically reconstituting the architecture of the reinforcement (300) of a composite material, **characterised in that** it comprises:
- for each reinforcing axis (X, Y) of the composite material, the steps (101, 102, 103, 104, 105, 106) of the method (100) for automatically reconstituting the architecture of the reinforcement (300) of the composite material along the reinforcing axis (X, Y), according to any preceding claim,
- a step of reconstituting (201) the architecture of the reinforcement (300) of the composite material from the architecture of each reinforcing thread (302) along each reinforcing axis (X, Y).

9. Computer program product comprising instructions which, when the program is executed by a computer, lead the latter to implement the steps of the method (100, 200) according to any preceding claim.

10. Recording medium that can be read by a computer comprising instructions which, when they are executed by a computer, lead the latter to implement the steps of the method (100, 200) according to any of claims 1 to 8.
